# EUROPEAN PATENT APPLICATION

(11) **EP 2 119 560 A1**
(43) Date of publication of application: **18.11.2009**
(21) Application number: 08009072.3
(22) Date of filing: 16.05.2008
(51) Int. Cl.: B32B 7/06, B32B 37/02

(54) **Lamination method**

(71) Applicant: Amcor Flexibles Transpac N.V., 1935 Zaventem (BE)
(72) Inventor: Daelmans, Eddy, 3650 Disen-Stokkem (BE); Olsen, Erik, 8700 Horsens (DK)
(74) Representative: pronovem

(57) **Abstract**

The present invention is related to a method for the production of two duplex structures on a triplex lamination equipment in one lamination step comprising the steps of:
- producing a double polymer film;
- laminating a first and a second lamination film on both sides of said double polymer film to obtain a laminated double polymer film;
- separating the laminated double polymer film in two single laminated polymer films.

## Description

### Field of the Invention

The present invention is related to a lamination method of polymer films. This lamination method uses a three-layer lamination machinery (triplex) to produce in one step a double laminated film, which is finally separated in two single laminated polymer films.

### State of the Art

In the polymer film converting industry lamination is a key factor to make multilayer structures. In the lamination process, two layers of film adhere together using usually an adhesive in between the layers. The adhesive is usually a two component adhesive, which is either solvent-based, which means that the two components are dissolved in a solvent, or solvent-free. However, there are other ways to seal two polymer materials together, like e.g. heat lamination. In a heat lamination process, the laminated films are achieved by the use of heat and pressure to create a sufficient bond between the polymer films.

When two films are laminated, the process is hereafter referred as a duplex lamination. The process takes place on a duplex laminator, which is a machine with two unwinders for the two films, an adhesive application station, a nipping station and a winder for the final laminated film. In the case of a solvent-based lamination, a drying section is inserted between the adhesive application station and the nipping station. Typical structures for duplex lamination are: OPET/PE, metallized OPET/PE, OPA/PE, metallized OPA/PE, OPET/PE-EVOH-PE, OPA/PE-EVOH-PE...

Laminating three films together is referred hereafter as triplex lamination. There are two ways to produce a triplex laminated structure:
- starting with a duplex lamination and then using the duplex laminator to apply another layer on top of the duplex laminate;
- using a triplex laminator which in principle can be two duplex laminators in a row.

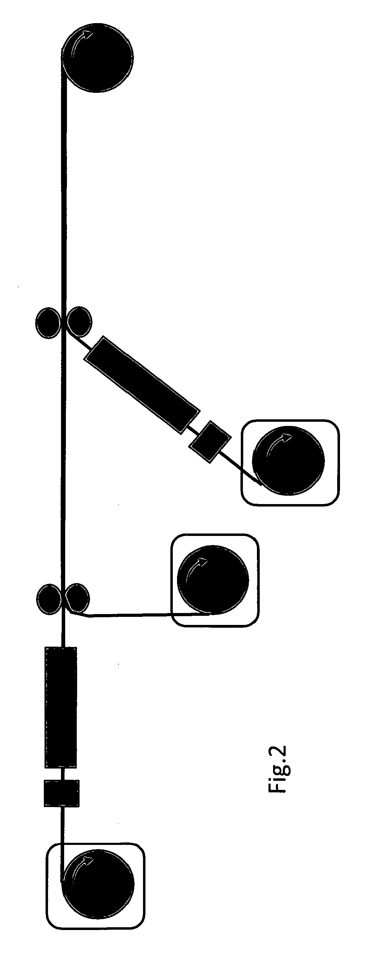

A triplex machinery comprises three unwinders, one or more drying sections and one or more adhesive application stations, one or more nipping stations and a winder for the final laminate (see in Fig. 2).

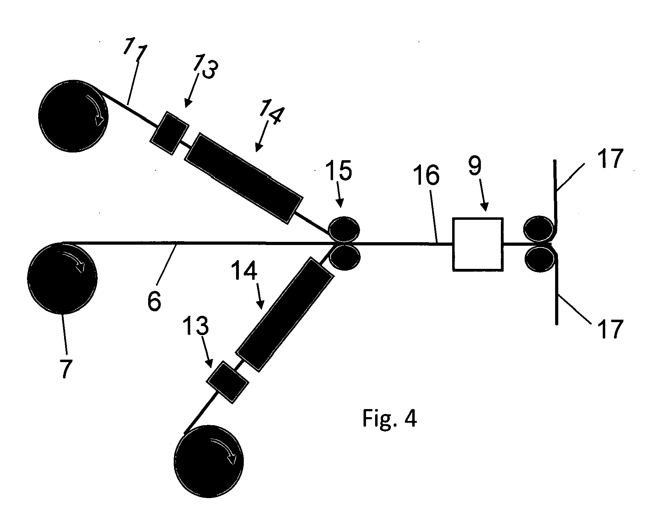

Alternatively, one can also laminate on both sides of a central layer, an adhesive being applied on the outer layer (or on both sides of the central layer) in parallel, the three layers being laminated in only one nipping station (see in Fig. 4) Typical triplex structures are as follows: OPET/Alu foil/PE, OPA/ALU foil/PE, OPP/Metallized OPET/PE,...

The document FR1389548A discloses a detailed description of lamination machinery.

In blown film production, a tube is extruded from a circular extrusion die, inflated into a bubble and collapsed by means of a folding device to form a lay-flat tube. The lay-flat tube is then usually slit on its edges and wound on two winder stations to produce two reels.

In some particular cases, the lay-flat tube is wound directly, without being slit. This is for example the case for the production of soft bags.

The document US4539236 discloses a particular application of such a lay-flat tube wherein the tube is laminated on both sides with identical lamination films, producing a multilayer tube. Said tube is then used to produce soft bags, directly from the lay flat tube (i.e. without slitting the tube).

The document US4937113 discloses a film structure obtained by collapsing the bubble of a multilayer blown film and using the resulting lay-flat tube as a double film with a symmetrical structure. In this case, the bubble is collapsed before the internal layer is completely solidified, so that it adheres on itself, producing said symmetrical structure.

### Aims of the Invention

The present invention aims to provide a cost effective method for the production of two duplex polymer laminates with a triplex laminator equipment.

### Summary of the Invention

The present invention discloses a method for the production of two duplex structures on a triplex lamination equipment in one lamination step comprising the steps of:
- producing a double polymer film;
- laminating a first and a second lamination film on both sides of said double polymer film to obtain a laminated double polymer film;
- separating the laminated double polymer film in two single laminated polymer films

Particular embodiments of the present invention comprise one or any suitable combination of the following features:
- the double polymer film 10 is a multilayer polymer film;
- the first and the second lamination films (11,11') are multilayer polymer film;
- the first and the second lamination films (11,11') are themselves multilayer laminates;
- the first and the second lamination films (11,11') are coextruded multilayer films;
- the first and the second lamination films (11,11') are selected from the group consisting of OPET, metallized OPET, OPA, metallized OPA, OPP or metallised OPP;
- the first and the second lamination films (11,11') are selected from the group consisting of OPS, PE, PP, PVC, Cellophane, Paper;
- the first and the second lamination films (11,11') are selected from the group consisting of OPET/PA, OPET/PA-EVOH-PA, OPET/Metallised OPET, Metallised OPET/PA, OPET/ALU, OPET/ALU/OPET, OPET/ALU/OPA, OPA/ALU, OPA/PA-EVOH-PA, OPA/Metallised OPET, PA/OPET, PA/metallised OPET, PA/Metallised OPET or OPP/Metallised OPET;
- the first and the second lamination films (11,11') are selected from the group consisting of OPP/metallised OPA, OPP/ALU, OPP-EVOH/OPET, OPP/OPET-EVOH or OPP/OPET;
- the first and the second lamination films (11,11') are selected from the group consisting of PP/PA, PP-EVOH-PP/PA, PP/PA-EVOH-PA, PE/OPET, PE/Metallised OPET, PE-Metallised OPA, PE-EVOH-PE/OPET, PE/OPA, PE-EVOH-PE/OPA, PE/PA, PE/PA-EVOH-PA, PE/PA-PVDC, Paper/OPET, Paper/OPET-EVOH or Paper/Metallised OPET;
- the first and second lamination films (11,11') have a weight below 200 g/m2.

### Brief Description of the Drawings

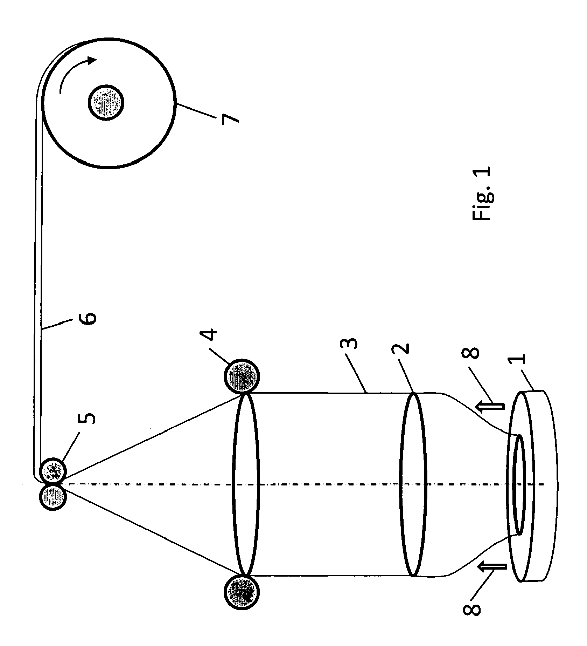

Fig. 1 shows the production process of a lay-flat tube by blown extrusion.

Fig. 2 shows a triplex lamination process by two duplex laminators in a row.

Fig. 3 shows the triplex lamination process of the present invention wherein a lay-flat tube (double film) is laminated by two duplex laminators in a row and then separated into two duplex structures.

Fig. 4 shows a triplex lamination process on a single nipping station.

Fig. 5 shows the triplex lamination process of the present invention wherein a lay-flat tube (double film) is laminated by two duplex laminators in a row with two different lamination films in terms of nature and thickness and then separated into two different duplex structures.

### Detailed Description of the Invention

In the present invention, a lay-flat tube is laminated on both sides in a triplex lamination machinery and slit on the edges, and then both sides are separated and wound on two reels, producing two duplex laminated films in one step. As an example, the lay-flat tube can be a collapsed blown film, but it can be produced by any other suitable process.

Alternatively the edges of the lay-flat tube can be slit before the lamination process and wound on one reel, producing a double polymer film reel. For the sake of clarity, we will refer hereafter indifferently to lay-flat tube or to double film, since the slitting can occur at any place and is technically not relevant for the present invention.

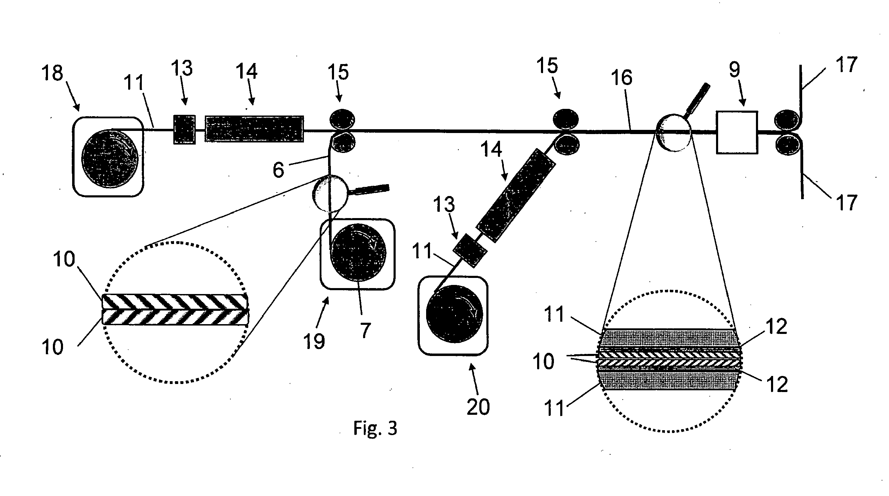

Fig.3 shows an example of such a process. A first lamination film 11 is fed by an unwinder 18 into an adhesive application station 13, then it passes trough a drying station 14 (only in the case of solvent or water based adhesives) followed by a nipping station 15 along with the lay flat tube 6, fed by the unwinder 19.

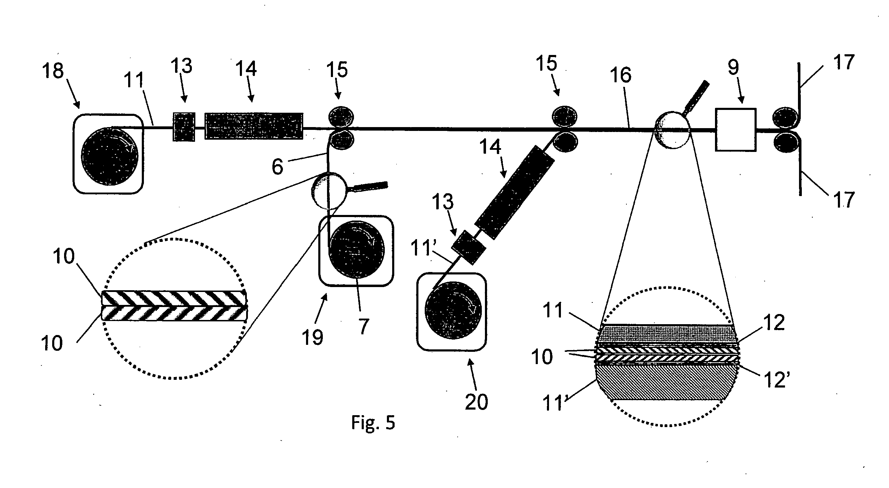

At this stage, a lay-flat tube having the targeted structure on one side and the blown film structure on the other side is obtained. This asymmetrical structure is then fed to the second nipping unit, along with the second lamination film 11 coated with an adhesive supplied by the adhesive application unit 13, said second lamination film 11 being supplied by a third unwinder 20. The structure is, at this stage, a lay flat tube laminated on each side 16 (see magnified inserts in fig.3 and fig.5).

The edges of the obtained laminated lay flat tube 16 are then slit, so that an upper multilayer laminated film and a lower multilayer laminated film, the so called duplex structures 17, can be separated and wound on two reels. As already mentioned, the slitting could be done before the lamination step, but in that case, only the separation of the two duplex structures occur at this stage.

It should be noticed that, depending on the targeted structure, the adhesive could also be applied on the surfaces of the blown film 10 instead of the surfaces of the lamination films 11.

The process of the present invention can also be performed on the triplex process equipment with one single nipping station 15 as shown in Fig. 4.

Both blown film 10 and lamination films 11 can be multilayer films. Those multilayer films can be coextruded or laminated.

The lamination films 11 can be either identical or different, so that the upper multilayer film and the lower multilayer film can have different structures.

As an example of structure, a metallized OPET film roll is placed on the first unwinder 18, a polyethylene lay-flat tube roll on the second unwinder 19, and again a metallised OPET film roll on the third unwinder 20. This triplex lamination will produce a PE lay flat tube having metallized PET laminated by means of an adhesive 12 on both sides. The obtained lay flat tube with a laminate on each side is then slit in the requested dimensions in the slitting station 9 and wound on two or more reels. Films on said reels have the final structure of metallized OPET/PE.

Examples of the first and the second lamination films (11,11') are OPET, metallized OPET, OPA, metallized OPA, OPP or metallised OPP and OPS, PE, PP, PVC, Cellophane or paper.

Examples of the first and the second lamination films (11,11'), which are themselves laminates, are OPET/PA, OPET/PA-EVOH-PA, OPET/Metallised OPET, Metallised OPET/PA, OPET/ALU, OPET/ALU/OPET, OPET/ALU/OPA, OPA/ALU, OPA/PA-EVOH-PA, OPA/Metallised OPET, PA/OPET, PA/metallised OPET, PA/Metallised OPET or OPP/Metallised OPET and OPA, OPP/ALU, OPP-EVOH/OPET, OPP/OPET-EVOH or OPP/OPET.

Examples of the first and the second lamination films (11,11'), which are themselves laminates and/or multilayer coextrudates, are PP/PA, PP-EVOH-PP/PA, PP/PA-EVOH-PA, PE/OPET, PE/Metallised OPET, PE-Metallised OPA, PE-EVOH-PE/OPET, PE/OPA, PE-EVOH-PE/OPA, PE/PA, PE/PA-EVOH-PA, PE/PA-PVDC, Paper/OPET, Paper/OPET-EVOH or Paper/Metallised OPET and any other suitable combination wherein the first and second lamination films (11,11') have a weight below 200 g/m2.

### Keys

**1.** Blown film die
**2.** Solidification line
**3.** Film bubble
**4.** Entrance of the folding unit
**5.** Exit of folding the unit
**6.** Lay flat tube (or double film)
**7.** Wound lay flat tube coil
**8.** Cooling air flow
**9.** Slitting unit
**10.** Blown film
**11. 11'.** Lamination films
**12. 12'.** Adhesive layers
**13.** Adhesive application station
**14**. Drying section (optional)
**15.** Nipping station
**16.** Laminated lay flat tube
**17.** Individual multilayer film
**18.** First unwinder
**19.** Second unwinder
**20.** Third unwinder

## Claims

1. Method for the production of two duplex structures (17) on a triplex lamination equipment in one lamination step comprising the steps of:
- producing a double polymer film (6);
- laminating a first and a second lamination film (11) on both sides of said double polymer film (6) to obtain a laminated double polymer film (16);
- separating the laminated double polymer film in two single laminated polymer films.

2. The method of claim 1 wherein the double polymer film (10) is a multilayer polymer film.

3. The method of claim 1 or 2 wherein the first and the second lamination films (11,11') are multilayer polymer films.

4. The method of claim 3 wherein the first and the second lamination films (11,11') are themselves multilayer laminates.

5. The method of any of the previous claims wherein the first and the second lamination films (11,11') are coextruded multilayer films.

6. The method of claim 1 or 2 wherein the first and the second lamination films (11,11') are selected from the group consisting of OPET, metallized OPET, OPA, metallized OPA, OPP or metallised OPP.

7. The method of claim 1 or 2 wherein the first and the second lamination films (11,11') are selected from the group consisting of OPS, PE, PP, PVC, Cellophane, paper.

8. The method of any of the claims 1 to 4 wherein the first and the second lamination films (11,11') are selected from the group consisting of OPET/PA, OPET/PA-EVOH-PA, OPET/Metallised OPET, Metallised OPET/PA, OPET/ALU, OPET/ALU/OPET, OPET/ALU/OPA, OPA/ALU, OPA/PA-EVOH-PA, OPA/Metallised OPET, PA/OPET, PA/metallised OPET, PA/Metallised OPET or OPP/Metallised OPET.

9. The method of any of the previous claims 1 to 4 wherein the first and the second lamination films (11,11') are selected from the group consisting of OPP/metallised OPA, OPP/ALU, OPP-EVOH/OPET, OPP/OPET-EVOH or OPP/OPET.

10. The method of any of the previous claims 1 to 5 wherein the first and the second lamination films (11,11') are selected from the group consisting of PP/PA, PP-EVOH-PP/PA, PP/PA-EVOH-PA, PE/OPET, PE/Metallised OPET, PE-Metallised OPA, PE-EVOH-PE/OPET, PE/OPA, PE-EVOH-PE/OPA, PE/PA, PE/PA-EVOH-PA, PE/PA-PVDC, Paper/OPET, Paper/OPET-EVOH or Paper/Metallised OPET.

11. The method of any of previous claim wherein the first and second lamination films (11,11') have a weight below 200 g/m2.
